# EUROPEAN PATENT APPLICATION

(11) **EP 4 336 147 A1**
(43) Date of publication of application: **13.03.2024**
(21) Application number: 22194467.1
(22) Date of filing: 07.09.2022
(51) Int. Cl.: G01C 21/34, G01C 21/36, G06Q 10/047, H04L 43/08, H04W 4/40

(54) **METHOD FOR PROVIDING ROUTE DATA FOR A VEHICLE**

(71) Applicant: Volvo Car Corporation, 405 31 Göteborg (SE)
(72) Inventor: LÖTBÄCK, Christian, 40531 Göteborg (SE); FRIDHOLM, Björn, 40531 Göteborg (SE); ENGLUND, Thomas, 40531 Göteborg (SE); PETERSSON, Linnea, 40531 Göteborg (SE)
(74) Representative: Maiwald GmbH

(57) **Abstract**

A computer-implemented method (100) for providing route data for a vehicle (50), comprising the step of providing (110) signal quality data related to a wireless network for a geographical region (60) comprising vehicle data of a plurality of vehicles, whereby the vehicle data comprise vehicle position data associated with signal strength data and signal frequency data, another step of providing (120) destination data for the vehicle (50) and a step of generating (130), by the vehicle (50) and/or a separate computing unit, the route data for the vehicle (50) based on the signal quality data and the destination data for the vehicle (50).

## Description

### TECHNICAL FIELD

The present disclosure relates to a method for providing route data for a vehicle, a system for providing route data for a vehicle, a vehicle for route planning, a vehicle of a plurality of vehicles further comprising a logging means for logging vehicle data and/or means for transmitting the vehicle data to a cloud and/or a second vehicle and/or a separate computing unit and a computer program element.

### BACKGROUND ART

Known route planning methods use, for example, the route length and/or travel time to a desired destination to generate a route for a vehicle that will guide to the desired destination. Also known are route planning methods that, for example, incorporate a traffic situation on a calculated route to recalculate and/or adjust a route. In addition, it is also known that data from connected vehicles are used to process and provide route data. However, the data from connected vehicles are not used for route planning. Moreover, connectivity data of vehicles are not used for route planning.

In view of this, it is found that a further need exists to provide an improved method for providing route data for a vehicle.

### SUMMARY

In the view of the above, it is an object of the present disclosure to provide a method for providing route data for a vehicle.

The problem is at least partially solved or alleviated by the subject matter of the independent claims of the present disclosure, whereby further examples are incorporated in the dependent claims.

According to a first aspect, a computer-implemented method for providing route data for a vehicle is disclosed, comprising:
providing signal quality data for a geographical region comprising vehicle data of a plurality of vehicles, whereby the vehicle data comprising vehicle position data associated with signal strength data and signal frequency data;
providing destination data for the vehicle; and
generating, by the vehicle and/or a separate computing unit, the route data for the vehicle based on the signal quality data and the destination data for the vehicle.

The provided vehicle data, vehicle position data, signal strength data and/or signal frequency data may be logged by the plurality of vehicles. In addition, other parameters that may be recorded by modems and/or vehicles and which may be useful for customers and internal applications may also be logged by the plurality of vehicles. Further recorded parameters may be comprised by the vehicle data. In other words, in modern vehicles, large amounts of data may be exchanged constantly via the internal communication buses. These data may include diagnostic data for control units and other electronics in the vehicle, as well as status displays for various functions. Some of this data may also be made available, e.g. in a cloud. Therefore, there may be a great potential to use this data, partly for new customer features and partly to improve the performance of a vehicle. The provided vehicle data may also be used to derive performance status of the communication means of the vehicle, e.g. for modems and/or antennas used in the respective vehicle.

The signal strength data may be based on the received power level of the signal originating from a base station (e.g. a 5G base station) and reported by the modem of the vehicle as the received signal strength indicator (RSSI) at the vehicle position in a geographic region at a given time. This received signal power level may modify over time if the vehicle is traveling in the geographic region. For example, the signal strength (and thus the RSSI value) may be better if the vehicle is closer to a base station and thus providing a better internet connection. In addition, the RSSI value may also be based on how well the receive link is constructed in the vehicle. For example, a better reception connection may be based on the antenna, receiver, cables, etc. whereby more power may be delivered to the modem and therefore the RSSI value may be higher if optimized reception components are used.

The frequency data may, for example, comprise data for all frequencies detected by the vehicle/modem or may only comprise data for predefined frequencies.

The plurality of vehicles may comprise at least one or more vehicles, whereby the plurality of vehicles may be, for example, a fleet of vehicles of a vehicle manufacturer and/or vehicle provider. Moreover, the plurality of vehicles may comprise modems and/or antennas similar to the modem and/or antenna provided in the vehicle for which route data may be provided.

The route data is generated by the vehicle and/or a separate computing unit and may be provided to the vehicle and/or accessible via the separate computing unit. Thereby, the vehicle may use the route data to provide navigation from a current location to a desired destination and/or support driving from the current location to a desired destination.

In other words, it may generally be a matter of collecting a combination of vehicle data parameters to provide these to applications of a vehicle. For the specific case of vehicle connectivity data, for example, the following steps may be taken,
a vehicle may be driven under real field conditions and may have a connection to a network (e.g. an internet connection). A combination of data parameters that may be of interest to a predefined application may be recorded at a predefined frequency, including but not limited to received signal strength, position data (global navigation satellite system), timestamp, and chassis number respectively vehicle identification number (VIN) of the vehicle;
the data points consisting of a combination of these data parameters may be uploaded to a cloud;
the data parameters may be collected from a large number of vehicles to create unique statistics over time through the collection of the data parameter. These statistics may be provided to developers or third parties.

Thereby, the generation of the route data may be based on real and up-to-date vehicular-measured data and statistics from a fleet of cars of the same car model/model year (and thereby the same connectivity hardware and software components) as the vehicle for which the route planning is performed, of the respective locations, in order that a more exact route planning may be performed. Thus, the accuracy in route planning with respect to connectivity requirements may be improved.

In an implementation, the generating of the route data may further be based on a predetermined signal quality value, whereby the predetermined signal quality value may preferably correspond to a needed signal strength level required for a voice communication of a driver of the vehicle and/or for file transfers of the driver.

The signal strength level may, for example, be based on the RSSI value, which may be reported by the modem of the vehicle and based on a received signal strength value in decibel of a signal.

The predetermined signal quality value for the voice communication may, for example, require that the signal strength level is always sufficient to make a call and/or that disconnections between the vehicle and a base station are to be avoided.

The predetermined signal quality value for the file transfer may, for example, require that the signal strength level is mostly high, in order that high data rates may be achieved in the connection between the vehicle and a base station.

In an implementation, the generating of the route data may further be based on a predetermined deviation value from a route planning without considering the signal quality data.

The deviation value may comprise, for example, a kilometer value and/or a time value by which the generated route may have a further distance compared to a distance-optimal route and/or by which the generated route may have a longer duration compared to a time-optimal route.

In an implementation, the method may further comprise connecting, one or more vehicles of the plurality of vehicles by means of a wireless connection with a wireless connection base station, preferably a cellular base station.

The cellular base station may also be understood as a cell site and/or cell tower, which may be a location for a cellular mobile means and where antennas and electronic communication devices may be placed (typically on a cell tower, tower, or other elevated structure) to create a cell or adjacent cells in a cellular network.

In an implementation, the vehicle data may further comprise time stamp data and/or vehicle identification number (VIN) data and/or the signal frequency data may further comprise quality-of-service data.

The quality of service data may be a measurement of the overall performance of a service, e.g., a telephony or computer network or a cloud computing service, in particular the performance perceived by the users of the network. To quantitatively measure quality of service, several related aspects of the network service may be considered, e.g., packet loss, bit rate, throughput, transmission delay, availability, jitter, etc.

In an implementation, the signal quality data may be provided to the vehicle and/or the separate computing unit.

The signal quality data may be accessed, for example, by the vehicle and/or the separate computing unit configured to further process and/or use of the signal quality data.

In an implementation, the separate computing unit may be configured as a cloud based computing unit.

For example, the cloud-based computing unit may be distributed in one network-accessible location or in multiple network-accessible locations. In addition, the database of the separate computing unit may also be distributed at a network-accessible location or at multiple locations accessible via one or more networks, whereby the location or locations may be different from the location or locations of the separate computing unit.

In an implementation, the method may further comprise processing, by the separate computing unit, the vehicle data.

In other words, by collecting and processing an amount of vehicle data from a variety of vehicles, it may be possible to provide a dataset in the database for different vehicle-related statistics. Thereby, it may be useful to structure and/or sort the dataset to make it more usable, e.g. for specific vehicle settings and/or vehicle specifications. Thus, a comprehensive set of statistics on the performance of the vehicles sending the data may be compiled. For example, the statistics may provide information for optimizing the performance of existing vehicles and/or for future vehicles. For example, connectivity data may answer typical questions about vehicle receiving performance and indicate whether its performance is good enough or may require improvements to vehicle receiving performance.

In an implementation, the method may further comprise providing, by the separate computing unit, the vehicle data and/or the processed vehicle data.

In an implementation, the vehicle data and/or the processed vehicle data may be provided to a computing device of a vehicle, a computing system and/or a mobile computing system.

In particular, by providing a collection of vehicle data, for example of all vehicles of a manufacturer, or for example, for the vehicle models of a manufacturer, it may be possible to make predictions of the robustness of the vehicle model with respect to the connectivity for each model of a manufacturer. This information may, for example, be provided to a vehicle manufacturer and/or a user of the vehicle.

Another benefit of having access to connectivity data of current vehicles may be that by creating the geographical region based on the signal quality data, areas with poor network coverage may be shown in a simplified way. This information may, for example, be provided to mobile network operators and thus lead to better area-wide network coverage.

In an implementation, the route data may further be generated by the computing device and/or the mobile computing device.

In other words, more applications may conceivably be added on top of that. For example, a customer (private driver or fleet manager) may have access to the statistics via an app and may be able to plan a driving route based on the highest probability of robust connectivity. Similarly, autonomous vehicles that rely on internet connectivity for advanced use cases in the future may use these statistics to optimize the driving route for the longest duration of automatic driving functionality.

A further aspect of the present disclosure relates to a system for providing route data for a vehicle, comprising:
a first providing unit configured to provide signal quality data for a geographical region comprising vehicle data of a plurality of vehicles, whereby the vehicle data comprising vehicle position data associated with signal strength data and signal frequency data;
a second providing unit configured to provide the destination data for the vehicle; and
a generating unit configured to generate, by the vehicle and/or the separate computing unit, the route data for the vehicle based on the signal quality data and the destination data for the vehicle.

In an implementation, the system may further comprise:
a connecting unit configured to connect a vehicle of a plurality of vehicles by means of a wireless connection with a wireless connection base station, preferably a cellular base station;
a processing unit configured to process, by the separate computing unit, the vehicle data of the database; and/or
a third providing unit configured to provide, by the separate computing unit, the vehicle data and/or the processed vehicle data of the database.

A further aspect of the present disclosure relates to a vehicle for route planning, a second vehicle of a plurality of vehicles further comprising a logging means for logging the vehicle data and/or means for transmitting the vehicle data to a cloud and/or a second vehicle and/or a separate computing unit comprising a disclosed system.

The second vehicle may be, for example, a vehicle of a plurality of vehicles. The plurality of vehicles may be more than two vehicles, preferably substantially more than two vehicles.

A further aspect of the present disclosure relates to a computer program element with instructions, which, when executed on a computing device of a computing environment, is configured to carry out the steps of the disclosed method in the disclosed system.

### BRIEF DESCRIPTION OF DRAWINGS

In the following, the disclosure is described exemplarily with reference to the enclosed figures, in which:
- **Fig. 1**: is an example of a diagram of the disclosed method;
- **Fig. 2**: is a schematic illustration showing an overview of an implementation of the disclosed system;
- **Fig. 3**: is a schematic illustration of an example of predicted signal quality data for a geographical region;
- **Fig. 4**: is a schematic illustration of an example of a RSSI usage in a vehicle;
- **Fig. 5**: is a schematic illustration of an example of actual signal quality data for a geographical region;
- **Fig. 6**: is a schematic illustration of a database of a separate computing unit comprising signal quality data for different geographical regions;
- **Fig. 7**: is a schematic illustration for providing signal quality data by the database of Fig. 6;
- **Fig. 8**: is a schematic illustration for sorting vehicle data;
- **Fig. 9**: is a schematic illustration for sorting signal quality data for geographical regions;
- **Fig. 10**: is a further schematic illustration for providing signal quality data by the database of Fig. 6; and
- **Fig. 11**: is a schematic illustration of an example for generating and providing route data based on a predetermined signal quality value.

Notably, the figures are merely schematic representations and serve only to illustrate examples of the present disclosure. Identical or equivalent elements are in principle provided with the same reference signs.

### DETAILED DESCRIPTION

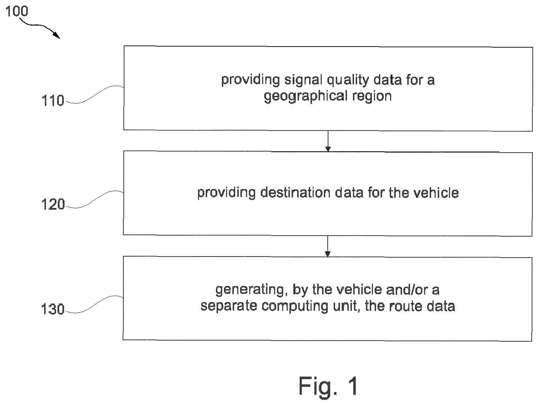

**Fig. 1** shows an example of a diagram of the disclosed method for providing route data 100 for a vehicle, comprising: providing signal quality data for a geographical region 110 comprising vehicle data of a plurality of vehicles, whereby the vehicle data comprising vehicle position data associated with signal strength data and signal frequency data; providing destination data for the vehicle 120; and generating, by the vehicle and/or a separate computing unit, the route data 130 for the vehicle based on the signal quality data and the destination data for the vehicle.

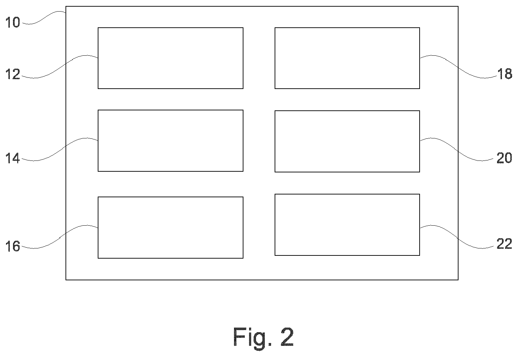

**Fig. 2** shows a schematic illustration showing an overview of an implementation of the disclosed system 10 for providing route data for a vehicle, comprising: a first providing unit 12 configured to provide signal quality data for a geographical region comprising vehicle data of a plurality of vehicles, whereby the vehicle data comprising vehicle position data associated with signal strength data and signal frequency data; a second providing unit 14 configured to provide the destination data for the vehicle; and a generating unit 16 configured to generate, by the vehicle and/or the separate computing unit, the route data for the vehicle based on the signal quality data and the destination data for the vehicle.

Further the system 10 may comprise: a connecting unit 18 configured to connect, at least one of the vehicles of the plurality of vehicles by means of a wireless connection with a wireless connection base station, preferably a cellular base station; a processing unit 20 configured to process, by the separate computing unit, the vehicle data of the database; and a third providing unit 22 configured to provide, by the separate computing unit, the vehicle data and/or the processed vehicle data of the database.

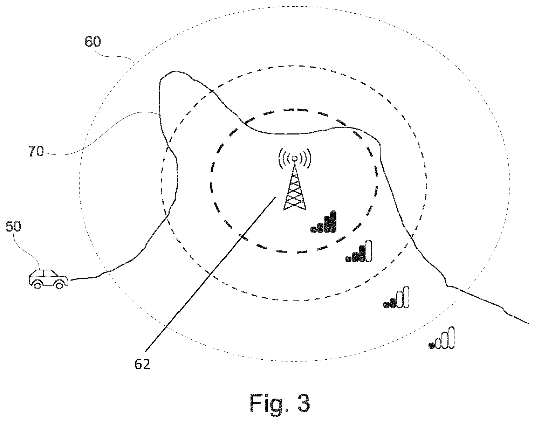

**Fig. 3** shows a schematic illustration of an example of predicted signal quality data for a geographical region, whereby a vehicle 50 travels along a vehicle's path 70 through a geographic region 60. Here, a base station 62, which transmits a wireless signal, is located in the center of the geographic region 60. Depending on different circumstances, e.g. a distance of the vehicle 50 to the base station 62, the wireless signal may have a different signal strength. As the vehicle 50 connects to the base station 62, the signal strength is represented for the vehicle's path 70 through the geographical region 60 by means of four bars of different sizes standing next to each other, whereby the present signal strength is represented by a black coloring of the bars.

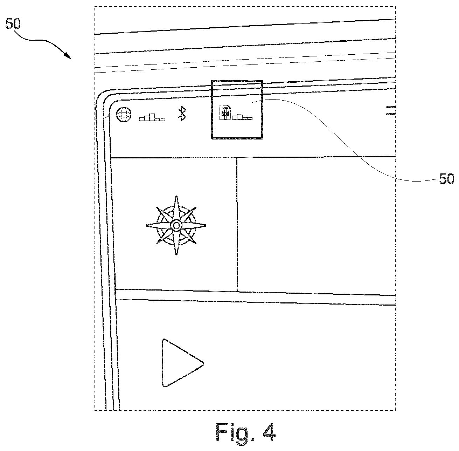

**Fig. 4** shows a schematic illustration of an example of a RSSI usage in a vehicle, whereby the vehicle 50 comprises an RSSI indicator 52 that provides a hint to the received signal strength or provides a simplified graphical representation of the received signal strength.

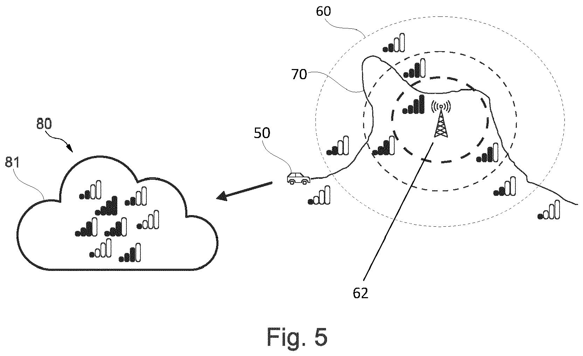

**Fig. 5** shows a schematic illustration of an example of actual signal quality data for a geographical region, whereby the vehicle 50 travels along a vehicle's path 70 through the geographic region 60. Here, the base station 62, which transmits a wireless signal, is located in the center of the geographic region 60. Depending on different circumstances, e.g. a distance of the vehicle 50 to the base station 62, the wireless signal may have a different signal strength. As the vehicle 50 connects to the base station 62, the signal strength is represented for the vehicle's path 70 through the geographical region 60 by means of four bars of different sizes standing next to each other, whereby the present signal strength is represented by a black coloring of the bars.

The vehicle 50 provides the vehicle data for its vehicle's path 70 through the geographical region 60 to a database 80, e.g. of the separate computing unit, which processes and includes the vehicle data of the vehicle 50 to first signal quality data 81 of the geographical region 60. Furthermore, vehicle data of a plurality of vehicles may be provided in the same manner and may be used to improve the accuracy of the first signal quality data 81 for the geographical region 60.

Further, whereby the database 80 of the separate computing unit may be configured as a cloud based database of the separate computing unit. However, the separate computing unit may be configured as a cloud based separate computing unit.

Further, vehicle data comprised by the signal quality data may comprise time stamp data and/or vehicle identification number (VIN) data and/or the signal frequency data may comprise quality of service data.

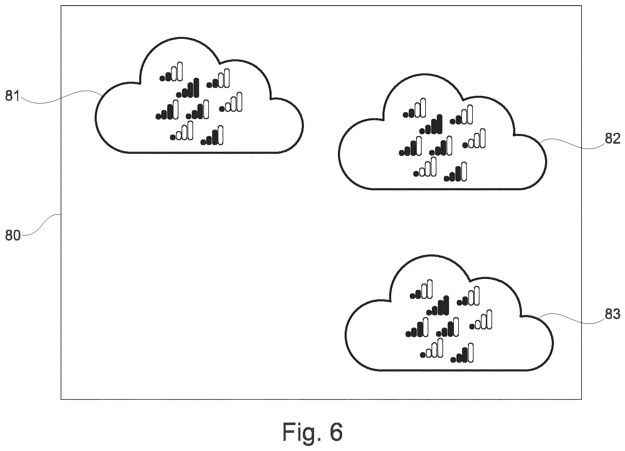

**Fig. 6** shows a schematic illustration of a database of a separate computing unit comprising signal quality data for different geographical regions, whereby the database 80 of the separate computing unit may comprise signal quality data for different geographical regions, e.g. first signal quality data 81 for the geographical region 60 and signal quality data 82, 83 for further geographical regions.

Further, the separate computing unit may process the different vehicle data and/or different signal quality data for different geographical regions.

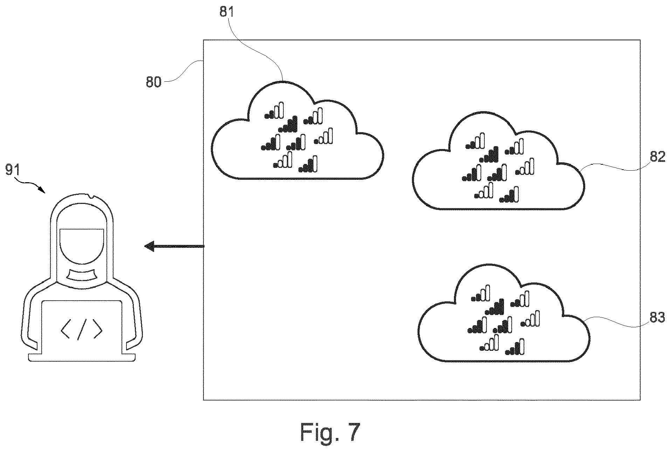

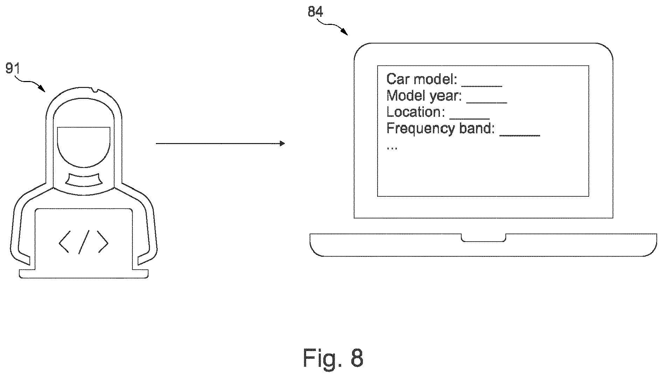

**Fig. 7** shows a schematic illustration for providing signal quality data by the database of **Fig. 6****,** whereby the separate computing unit may allow a user 91 to access the database 80 comprising the vehicle data and/or signal quality data and to analyze these data. The user 91 may access the database 80 by means of a computing system and/or a mobile computing system. Moreover, the signal quality data and/or the vehicle data may be provided to further computing units. **Fig. 8** shows a schematic illustration for sorting vehicle data, whereby the database 80 may be sorted/analyzed by means of parameters, e.g. technical specifications of the vehicles which have been used to provide/process the signal quality data. Such sorting/analyzing may be performed by the user 91 using a UI of the separate computing unit 84.

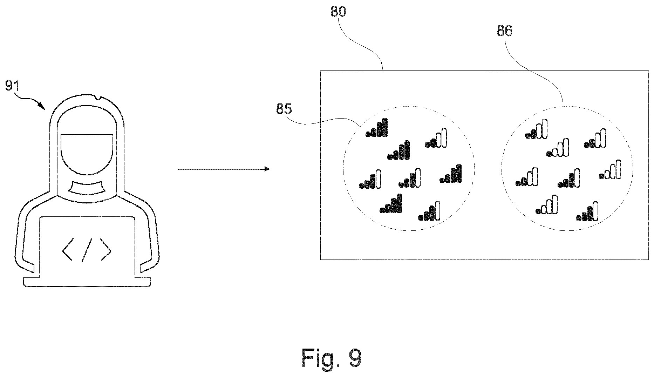

**Fig. 9** shows a schematic illustration for sorting signal quality data for geographical regions, whereby the database 80 is sorted/analyzed by means of parameters, e.g. technical specifications of the vehicles which have been used to provide/process the signal quality data. Thereby, the database 80 may provide first sorted signal quality data 85 and second sorted signal quality data 86. Further, the sorted signal quality 85, 86 data of the database 80 may be provided to the vehicle, the separate computing unit, a computing device and/or a mobile computing device for generating route data. Therefore, the sorted vehicle data may be provided to the first user 91.

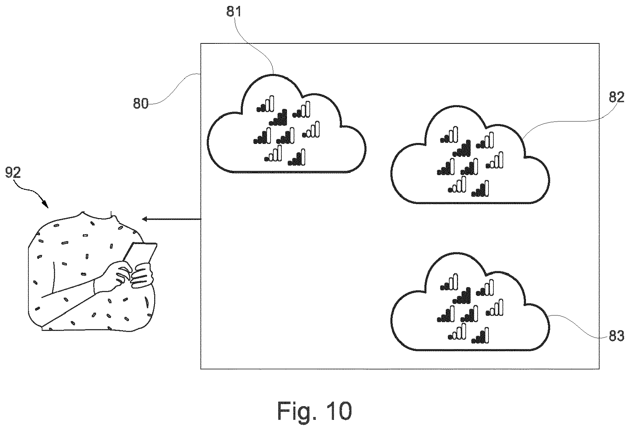

**Fig. 10** shows a further schematic illustration for providing signal quality data by the database 80 of **Fig. 6****,** whereby the separate computing unit may allow a second user 92 to access the database 80 comprising the vehicle data and/or the signal quality data and to analyze these data. The first user 91 may access the database 80 by means of a computing system and/or a mobile computing system. Moreover, the signal quality data and/or the vehicle data may be provided to further computing units. In addition, the second user 92 may use a mobile computing system to access the database 80.

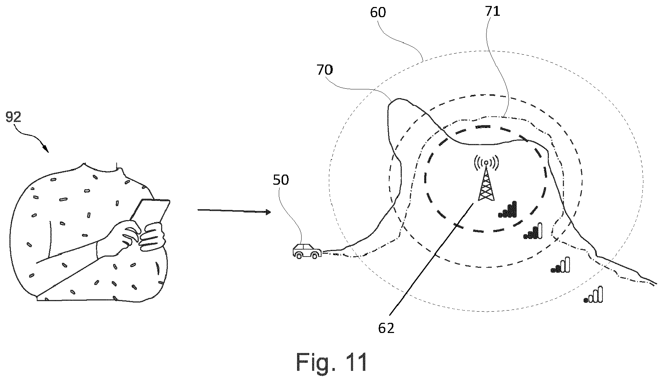

**Fig. 11** shows a schematic illustration of an example for generating and providing route data based on a predetermined signal quality value, whereby route data for an improved, i.e. with respect to the signal quality, vehicle's path 71 of the geographical region 60 are provided by the second user 92 to the vehicle 50. Thereby, the improved vehicle's path 71 differs from the non-improved vehicle's path 70, in such a way that it guides the vehicle 50 around the base station 62 in such a way that the vehicle 50 may mostly travel in areas of the geographical region 60 that provide an improved received signal strength compared to the non-improved vehicle's path 70. Moreover, the route data for the improved vehicle's path 71 may be provided to the vehicle 50 by a mobile computing system of the second user 92. However, the provision is not limited to such a mobile computing system, the route data may, additionally or alternatively, be provided by the vehicle 50 itself, the separate computing unit and/or devices with access to the database 80.

In addition, the generation of the route data may be based on a predetermined signal quality value, whereby the predetermined signal quality value may preferably correspond to a required signal strength level that may be required for a voice communication of a driver of the vehicle and/or for file transfers of a driver. The generation of the route data may be further based on a predetermined deviation value from a route planning without considering the signal quality data. A deviation from a distance and/or time-optimal route may be configured by means of the predetermined deviation value and included in the generation of the route data. Therefore, the generation of the route data may be based on the vehicle data of the geographical region 60, the predetermined signal quality value and/or the predetermined deviation value.

Moreover, a vehicle for route planning, a vehicle of a plurality of vehicles may further comprise logging means for logging the vehicle data and/or means for transmitting the vehicle data to a cloud and/or a second vehicle and/or a separate computing unit.

In addition, a computer program element with instructions, which, when executed on a computing device of a computing environment, may be configured to carry out the steps of the method for providing route data as described in the present disclosure.

Other variations to the disclosed examples may be understood and effected by those skilled in the art in practicing the claimed subject matter, from the study of the figures, the disclosure, and the appended claims. In particular, respective parts/functions of the respective example described above may also be combined with each other. In particular, the present disclosure is not limited to specific modules, vehicle functions, user interfaces, user interface areas/fields and/or communication methods. In the claims, the word "comprising" does not exclude other elements or steps and the indefinite article "a" or "an" does not exclude a plurality. The mere fact that certain measures are recited in mutually different dependent claims does not indicate that a combination of these measures may not be used to advantage. Any reference signs in the claims should not be construed as limiting the scope of the claims.

### LIST OF REFERENCE SIGNS

- 10: System for providing route data
- 12: First providing unit
- 14: Second providing unit
- 16: Generating unit
- 18: Connecting unit
- 20: Processing unit
- 22: Third providing unit
- 50: Vehicle
- 52: RSSI indicator
- 60: Geographical region
- 62: Base station
- 70: Vehicle's path
- 71: Improved vehicle's path
- 80: Database
- 81: First signal quality data
- 82: Second signal quality data
- 83: Third signal quality data
- 84: Sorting UI of the separate computing unit
- 85: first sorted signal quality data
- 86: second sorted signal quality data
- 91: First user
- 92: Second user
- 100: Method for providing route data
- 110: Providing signal quality data for a geographical region
- 120: Providing destination data for the vehicle
- 130: Generating, by the vehicle and/or a separate computing unit route data

## Claims

1. A computer-implemented method for providing route data for a vehicle, comprising:
providing (110) signal quality data for a geographical region comprising vehicle data of a plurality of vehicles, whereby the vehicle data comprising vehicle position data associated with signal strength data and signal frequency data;
providing (120) destination data for the vehicle; and
generating (130), by the vehicle and/or a separate computing unit, the route data for the vehicle based on the signal quality data and the destination data for the vehicle.

2. Method according to claim 1, whereby generating the route data is further based on a predetermined signal quality value, whereby the predetermined signal quality value preferably corresponds to a needed signal strength level required for a voice communication of a driver of the vehicle and/or for file transfers of the driver.

3. Method according to claim 1 or 2, whereby generating the route data is further based on a predetermined deviation value from a route planning without considering the signal quality data.

4. Method according to any one of the preceding claims, the method further comprising: connecting, one or more vehicles of the plurality of vehicles by means of a wireless connection with a wireless connection base station, preferably a cellular base station.

5. Method according any one of the preceding claims, whereby the vehicle data is further comprising time stamp data and/or vehicle identification number (VIN) data and/or the signal frequency data is further comprising quality-of-service data.

6. Method according to any one of the preceding claims, whereby the signal quality data is provided to the vehicle and/or the separate computing unit.

7. Method according to any one of the preceding claims, whereby the separate computing unit is configured as a cloud based computing unit.

8. Method according to claim 7, the method further comprising: processing, by the separate computing unit, the vehicle data.

9. Method according to any one of the claims 7 or 8, the method further comprising: providing, by the separate computing unit, the vehicle data and/or the processed vehicle data.

10. Method according to claim 9, whereby the vehicle data and/or the processed vehicle data is provided to a computing device of a vehicle, a computing system and/or a mobile computing system.

11. Method according to claim 10, whereby the route data is further generated by the computing device and/or the mobile computing device.

12. System for providing route data for a vehicle, comprising:
a first providing unit (12) configured to provide signal quality data for a geographical region comprising vehicle data of a plurality of vehicles, whereby the vehicle data comprising vehicle position data associated with signal strength data and signal frequency data;
a second providing unit (14) configured to provide the destination data for the vehicle; and
a generating unit (16) configured to generate, by the vehicle and/or the separate computing unit, the route data for the vehicle based on the signal quality data and the destination data for the vehicle.

13. System according to claim 12, further comprising:
a connecting unit (18) configured to connect, a plurality of vehicles, the vehicle by means of a wireless connection with a wireless connection base station, preferably a cellular base station;
a processing unit (20) configured to process, by the separate computing unit, the vehicle data of the database; and/or
a third providing unit (22) configured to provide, by the separate computing unit, the vehicle data and/or the processed vehicle data of the database.

14. A vehicle for route planning, a vehicle of a plurality of vehicles further comprising a logging means for logging the vehicle data and/or means for transmitting the vehicle data to a cloud and/or a second vehicle and/or a separate computing unit comprising a system according to any of the claims 12 to 13.

15. A computer program element with instructions, which, when executed on a computing device of a computing environment, is configured to carry out the steps of the method according to any one of the claims 1 to 12 in a system according to claim 12 or claim 13.

## Amended claims

### Amended claims in accordance with Rule 137(2) EPC.

1. A computer-implemented method for providing route data for a vehicle, comprising:
providing (110) signal quality data comprising vehicle data of a plurality of vehicles, whereby the vehicle data comprising vehicle position data associated with signal strength data, signal frequency data and vehicle identification number (VIN) data;
providing (120) destination data for the vehicle; and
generating (130), by the vehicle and/or a separate computing unit, the route data for the vehicle based on the signal quality data and the destination data for the vehicle.

2. Method according to claim 1, whereby generating the route data is further based on a predetermined signal quality value, whereby the predetermined signal quality value preferably corresponds to a needed signal strength level required for a voice communication of a driver of the vehicle and/or for file transfers of the driver.

3. Method according to claim 1 or 2, whereby generating the route data is further based on a predetermined deviation value from a route planning without considering the signal quality data.

4. Method according to any one of the preceding claims, the method further comprising: connecting, one or more vehicles of the plurality of vehicles by means of a wireless connection with a wireless connection base station, preferably a cellular base station.

5. Method according any one of the preceding claims, whereby the vehicle data is further comprising time stamp data and/or the signal frequency data is further comprising quality-of-service data.

6. Method according to any one of the preceding claims, whereby the signal quality data is provided to the vehicle and/or the separate computing unit.

7. Method according to any one of the preceding claims, whereby the separate computing unit is configured as a cloud based computing unit.

8. Method according to claim 7, the method further comprising: processing, by the separate computing unit, the vehicle data.

9. Method according to any one of the claims 7 or 8, the method further comprising:
providing, by the separate computing unit, the vehicle data and/or the processed vehicle data.

10. Method according to claim 9, whereby the vehicle data and/or the processed vehicle data is provided to a computing device of a vehicle, a computing system and/or a mobile computing system.

11. Method according to claim 10, whereby the route data is further generated by the computing device and/or the mobile computing device.

12. System for providing route data for a vehicle, comprising:
a first providing unit (12) configured to provide signal quality data comprising vehicle data of a plurality of vehicles, whereby the vehicle data comprising vehicle position data associated with signal strength data and signal frequency data;
a second providing unit (14) configured to provide destination data for the vehicle; and
a generating unit (16) configured to generate, by the vehicle and/or a separate computing unit, the route data for the vehicle based on the signal quality data and the destination data for the vehicle.

13. System according to claim 12, further comprising:
a connecting unit (18) configured to connect the vehicle by means of a wireless connection with a wireless connection base station, preferably a cellular base station;
a processing unit (20) configured to process, by the separate computing unit, the vehicle data of a database; and/or
a third providing unit (22) configured to provide, by the separate computing unit, the vehicle data and/or the processed vehicle data of the database.

14. A vehicle of a plurality of vehicles further comprising a logging means for logging the vehicle data and/or means for transmitting the vehicle data to a cloud and/or a second vehicle and/or a separate computing unit comprising a system according to any of the claims 12 to 13.

15. A computer program element with instructions, which, when executed on a computing device of a computing environment, is configured to carry out the steps of the method according to any one of the claims 1 to 11 in a system according to claim 12 or claim 13.
